# EUROPÄISCHE PATENTANMELDUNG

(11) **EP 4 600 625 A1**
(43) Veröffentlichungstag der Anmeldung: **13.08.2025**
(21) Anmeldenummer: 24217510.7
(22) Anmeldetag: 04.12.2024
(51) Int. Cl.: G01M 3/02, G01M 3/32

(54) **BARRIERESYSTEM UND VERFAHREN ZUM BETRIEB EINES BARRIERESYSTEMS**

(30) Priorität: 09.02.2024 DE 102024103732
(71) Anmelder: Syntegon Technology GmbH, 71332 Waiblingen (DE)
(72) Erfinder: Kühnle, Albrecht, 74564 Crailsheim (DE); Ebert, Jens, 74579 Fichtenau (DE)
(74) Vertreter: DREISS Patentanwälte PartG mbB

(57) **Zusammenfassung**

Die Erfindung betrifft ein Barrieresystem (10), umfassend ein Gehäuse (16) mit einem aseptischen Innenraum (20), einen Handschuh (32) und eine Prüfeinrichtung (40) zur Prüfung einer Dichtigkeit des Handschuhs, wobei die Prüfeinrichtung mit einer Unterdruckeinrichtung (50) gekoppelt ist, wobei eine Umgebung des Gehäuses und der Prüfeinrichtung durch einen Reinraum (12) gebildet ist, mit einem in dem Innenraum des Gehäuses angeordneten Zusatzsensor (54) zur Erfassung eines Innenraum-Drucks in dem Innenraum (20) und mit einer Auswerteeinrichtung (58), welche zumindest mittelbar mit dem Drucksensor (52) und mit dem Zusatzsensor (54) gekoppelt ist.

## Beschreibung

Die Erfindung betrifft ein Barrieresystem, umfassend ein Gehäuse mit einem aseptischen Innenraum, einen Handschuh und eine Prüfeinrichtung zur Prüfung einer Dichtigkeit des Handschuhs, wobei der Handschuh an einem Handschuheingriff des Gehäuses angeordnet ist, wobei der Handschuh in einem Gebrauchszustand mit nach außen weisender Außenfläche und nach innen weisender Innenfläche in dem Innenraum des Gehäuses angeordnet ist und wobei der Handschuh in einem Prüfzustand mit nach innen weisender Außenfläche und nach außen weisender Innenfläche in einer Prüfkammer der Prüfeinrichtung angeordnet ist und einen Handschuhinnenraum umgrenzt, der mit dem Innenraum kommuniziert, wobei die Prüfkammer auf der Außenseite des Gehäuses und den Handschuheingriff mediendicht überfangend angeordnet ist, wobei in der Prüfkammer ein Drucksensor angeordnet ist zur Erfassung eines Zwischenraum-Drucks in einem Zwischenraum zwischen der nach außen weisenden Innenfläche des Handschuhs und einer innenseitigen Begrenzung der Prüfkammer, wobei die Prüfeinrichtung mit einer Unterdruckeinrichtung gekoppelt ist, mittels welcher der Zwischenraum zur Prüfung der Dichtigkeit des Handschuhs mit Unterdruck beaufschlagbar ist, wobei eine Umgebung des Gehäuses und der Prüfeinrichtung durch einen Reinraum gebildet ist.

Aus der DE 10 2004 030 766 B4 ist ein Prüfsystem und Verfahren zur Messung der Dichtigkeit von Handschuhen bekannt.

Hiervon ausgehend liegt der vorliegenden Erfindung die Aufgabe zugrunde, eine besonders zuverlässige Prüfung eines Handschuhs auf Dichtigkeit zu ermöglichen.

Diese Aufgabe wird bei einem Barrieresystem der eingangs genannten Art erfindungsgemäß gelöst durch einen in dem Innenraum des Gehäuses angeordneten Zusatzsensor zur Erfassung eines Innenraum-Drucks in dem Innenraum und durch eine Auswerteeinrichtung, welche zumindest mittelbar mit dem Drucksensor und mit dem Zusatzsensor gekoppelt ist.

Die Erfindung ermöglicht die Erfassung einer über das Material des Handschuhs hinweg anliegenden Druckdifferenz, also die Erfassung einer Druckdifferenz, die zwischen der Außenseite und der Innenseite des Handschuhs anliegt. Der in dem Innenraum des Gehäuses angeordnete Zusatzsensor erfasst nicht nur den Druck im Innenraum des Gehäuses, sondern auch den Druck des Handschuhinnenraums, der mit dem Innenraum des Gehäuses kommuniziert. Dies ermöglicht die Durchführung einer Dichtigkeitsprüfung, welche von Störeinflüssen unabhängig ist. Ein Störeinfluss ist beispielsweise eine Änderung des Innenraum-Drucks.

Gemäß einer Ausführungsform sind der Drucksensor und der Zusatzsensor durch einen Differenzdrucksensor gebildet, wodurch eine besonders genaue, direkte und hoch aufgelöste Erfassung einer Druckdifferenz über das Material des Handschuhs hinweg ermöglicht wird.

Es ist auch möglich dass der Drucksensor Teil eines Zwischenraum-Differenzdrucksensors ist, der eine Differenz zwischen dem Zwischenraum-Druck und einem Reinraum-Druck in dem Reinraum erfasst. Dies ermöglicht die Durchführung einer Dichtigkeitsprüfung unter Berücksichtigung des Reinraum-Drucks.

Ferner ist es möglich, dass der Zusatzsensor Teil eines Innenraum-Differenzdrucksensors ist, der eine Differenz zwischen dem Innenraum-Druck und einem Referenz-Druck an einem Referenzort erfasst. Dies ermöglicht die Durchführung einer Dichtigkeitsprüfung unter Berücksichtigung eines Referenz-Drucks an einem Referenzort.

Der Referenzort kann durch den Reinraum gebildet sein oder alternativ hierzu durch einen außerhalb des Reinraums (und auch außerhalb des Innenraums) angeordneten Außenraum, bei dem es sich beispielsweise um einen von dem Barrieresystem räumlich entfernten Gebäudeteil handeln kann.

Wenn der Referenzort der außerhalb des Reinraums angeordnete Außenraum ist, kann ein mit der Auswerteeinrichtung gekoppelter Reinraum-Differenzdrucksensor vorgesehen sein, der zur Erfassung einer Druckdifferenz zwischen dem Reinraum-Druck in dem Reinraum und einem Außenraum-Druck in dem Außenraum dient. Dies ermöglicht die Durchführung einer Dichtigkeitsprüfung unter Berücksichtigung des Reinraum-Drucks und des Außenraum-Drucks.

Es ist möglich, dass der Zusatzsensor Bestandteil eines Druckregelungssystems zur Regelung des Innenraum-Drucks ist, also physikalisch nicht noch einmal bereitgestellt werden muss, jedoch - zumindest indirekt - mit der Auswerteeinrichtung kommuniziert.

Die Erfindung betrifft ferner ein Verfahren zum Betrieb eines vorstehend erläuterten Barrieresystems. Bei diesem Verfahren wird die Prüfung der Dichtigkeit des Handschuhs durchgeführt, während der Innenraum des Gehäuses zum Reinraum hin mediendicht abgeschlossen ist. In diesem Zustand ist der Innenraum des Gehäuses insbesondere bereits für die Durchführung einer Produktion vorbereitet.

Besonders bevorzugt ist es, wenn die Prüfung auf Dichtigkeit des Handschuhs durchgeführt wird, während in dem Innenraum des Gehäuses eine Produktion durchgeführt wird. Die Prüfung eines Handschuhs auf Dichtigkeit kann also während eines bei einer Produktion aktiven Barrieresystems durchgeführt werden.

Bei dem Gehäuse des Barrieresystems kann es sich um einen Isolator eines Isolatorsystems handeln oder - für eine Verwendung in Reinraumumgebungen mit höheren Reinraumklassen - um ein "RABS"-Gehäuse oder um ein "cRABS"-Gehäuse. "RABS" bedeutet "Restricted Access Barrier System"; "cRABS" bedeutet "closed Restricted Access Barrier System".

Weitere Merkmale und Vorteile der Erfindung sind Gegenstand der nachfolgenden Beschreibung bevorzugter Ausführungsbeispiele.

In der Zeichnung zeigt:
- Fig. 1: eine schematische Ansicht einer Ausführungsform eines Barrieresystems;
- Fig. 2: eine schematische Ansicht einer weiteren Ausführungsform eines Barrieresystems;
- Fig. 3: eine schematische Ansicht einer weiteren Ausführungsform eines Barrieresystems;
- Fig. 4: eine beispielhafte Darstellung für typische Verläufe von Druckdifferenzen, die während einer Prüfung der Dichtigkeit eines Handschuhs anliegen, und zwar zwischen einem Innenraum eines Gehäuses des Barrieresystem und einem Zwischenraum einer Prüfkammer des Barrieresystems.

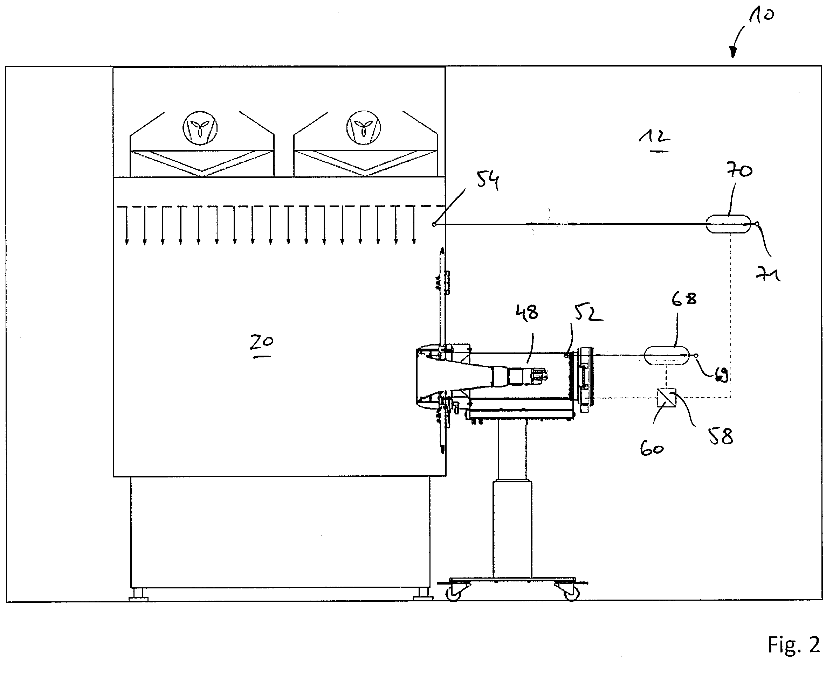

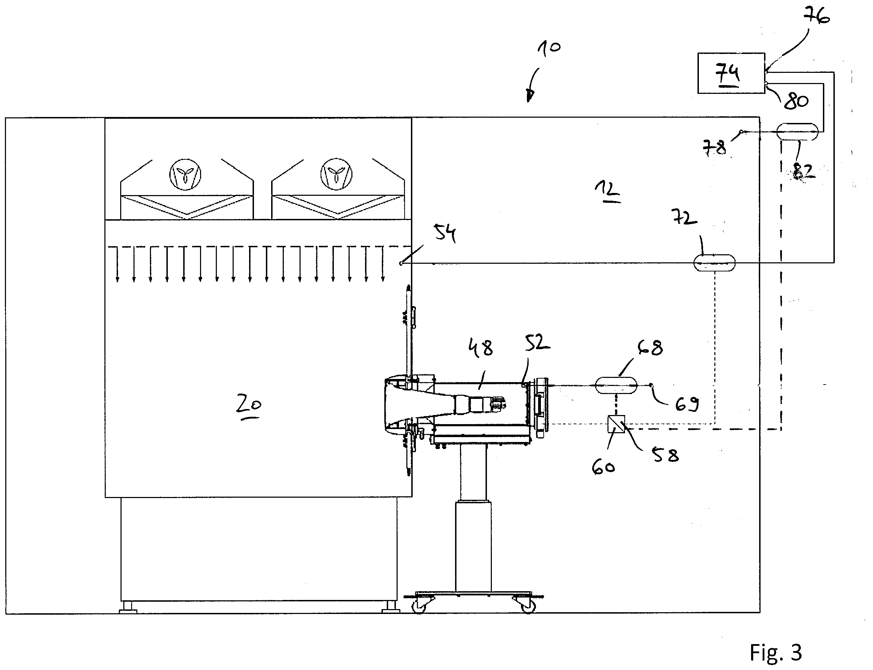

Eine Ausführungsform eines Barrieresystems sind in der Zeichnungen insgesamt mit dem Bezugszeichen 10 bezeichnet. Nachfolgend werden zunächst ein allen Ausführungsformen gemeinsamer Grundaufbau und die Grundfunktion des Barrieresystems erläutert. Anschließend werden die Besonderheiten der beiden Ausführungsformen der Fig. 2 und 3 erläutert.

Das Barrieresystem 10 umfasst einen Reinraum 12, der von einer Reinraum-Begrenzung 14 begrenzt ist. In dem Reinraum 12 ist ein Gehäuse 16, beispielsweise in Form eines Isolators, angeordnet.

Das Gehäuse 16 umgrenzt einen Vorraum 18 und einen davon getrennten Innenraum 20, der auch als Arbeitsraum bezeichnet werden kann. Der Innenraum 20 wird über eine Prozessluftversorgung 22 und über einen Eingangsfilter 24 mit Prozessluft gespeist.

An einer Wandung 28 des Gehäuses 16 ist ein Handschuheingriff 30 angeordnet, der zur Anordnung eines Handschuhs 32 dient. In der Zeichnung ist der Handschuh in einem Prüfzustand dargestellt, in welcher eine Außenfläche 34 des Handschuhs 32 nach innen weist und in diesem Prüfzustand einen Handschuhinnenraum 36 begrenzt. Eine Innenfläche 38 des Handschuhs 32 weist in diesem Prüfzustand nach außen.

In einem nicht dargestellten Gebrauchszustand des Handschuhs ist dieser in dem Innenraum 20 des Gehäuses 16 angeordnet, wobei die Außenfläche 34 nach außen weist und die Innenfläche 38 nach innen.

Zur Prüfung einer Dichtigkeit des Handschuhs 32 weist das Barrieresystem eine Prüfeinrichtung 40 auf. Diese umfasst eine auf einer Außenseite 42 des Gehäuses 16 angeordnete Prüfkammer 44, welche den Handschuheingriff 30 mediendicht überfängt.

Die Prüfkammer 44 weist eine innenseitige Begrenzung 46 auf. Zwischen der Begrenzung 46 der Prüfkammer und der nach außen weisenden Innenfläche 38 des Handschuhs 32 ist ein Zwischenraum 48 ausgebildet.

Die Prüfkammer 44 ist mittels einer an sich bekannten und daher nur schematisch dargestellten Unterdruckeinrichtung 50 mit Unterdruck beaufschlagbar.

In der Prüfkammer 44 ist ein Drucksensor 52 angeordnet, der einen Zwischenraum-Druck in dem Zwischenraum 48 erfasst.

In dem Innenraum 20 des Gehäuses 16 ist ein Zusatzsensor 54 angeordnet, der einen Innenraum-Druck in dem Innenraum 20 erfasst.

Der Drucksensor 52 und der Zusatzsensor 54 sind in Form eines Differenzdrucksensors 56 bereitgestellt, der mit einer Auswerteeinrichtung 58 kommuniziert.

Ferner ist eine Steuereinrichtung 60 zur Ansteuerung der Unterdruckeinrichtung 50 vorgesehen.

In einem Ausgangszustand zur Prüfung einer Dichtigkeit des Handschuhs 32 sind der Innenraum-Druck des Innenraums 20 des Gehäuses 16 und der Zwischenraum-Druck des Zwischenraums 48 der Prüfkammer 44 zunächst identisch. Die Steuereinrichtung 60 steuert die Unterdruckeinrichtung 50 dann so an, dass der Druck in dem Zwischenraum 48 der Prüfkammer 44 abnimmt, beispielsweise um ca. 1200 Pascal.

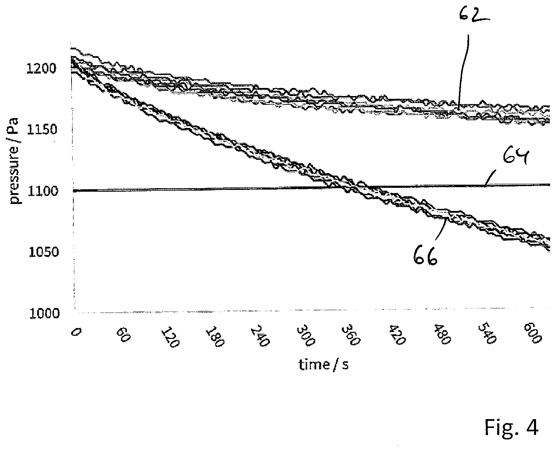

Sofern der Innenraum-Druck in dem Innenraum 20 des Gehäuses 16 konstant bleibt, und der Handschuh 32 keine Beschädigung aufweist, nimmt der durch den Drucksensor 52 und durch den Drucksensor 54 erfasste Differenzdruck über eine vorgegebene Zeitdauer (bspw. eine Zeitdauer von mindestens 8 oder 10 Minuten) hinweg nur geringfügig ab; ein hierfür typischer Differenzdruckverlauf ist in Fig. 4 mit dem Bezugszeichen 62 bezeichnet. Ein solchermaßen geprüfter Handschuh 32 kann an dem Handschuheingriff 30 verbleiben.

Ein Grenzwert für einen Differenzdruck, der während einer Dichtigkeitsprüfung nicht unterschritten werden darf, ist in Fig. 4 mit dem Bezugszeichen 64 bezeichnet. Schließlich ist in Fig. 4 ein typischer Differenzdruckverlauf mit dem Bezugszeichen 66 bezeichnet, der mit einem nicht mehr intakten, undichten Handschuh 32 korrespondiert. Ein solchermaßen geprüfter Handschuh 32 darf nicht an dem Handschuheingriff 30 verbleiben und muss durch einen neuen Handschuh ersetzt werden.

Sofern eine Dichtigkeitsprüfung positiv verlaufen ist, ein Handschuh 32 also keine Beschädigung aufweist, kann die Prüfeinrichtung 44 von der Außenseite 42 des Gehäuses entfernt werden, sodass der Handschuheingriff 30 von der Seite des Reinraums 12 her zugänglich wird. Ein Nutzer kann dann den Handschuh 32 aus dem Prüfzustand in seinen Gebrauchszustand überführen, indem er den Handschuh umstülpt, sodass der Handschuh 32 in dem Innenraum 20 des Gehäuses angeordnet ist und sodass die - während der Prüfung auf Dichtigkeit nach innen weisende Außenseite 34 - nach dem Umstülpen nach außen weist.

Die vorstehend beschriebene Prüfung kann insbesondere auch während eines aktiven Produktionsbetriebs des geschlossenen Gehäuses 16 durchgeführt werden, ohne dass die Produktion unterbrochen werden muss. Insbesondere ist es nicht erforderlich, die Produktion zu beenden, die Dichtigkeitsprüfung durchzuführen und die Produktion dann erneut aufzunehmen, obwohl auch dies möglich ist.

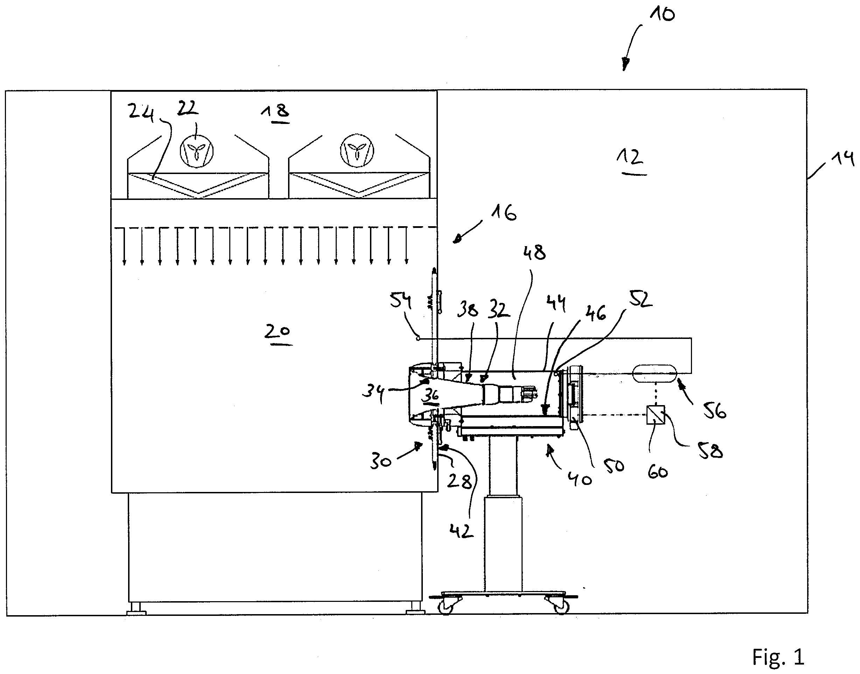

Mit dem Barrieresystem 10 gemäß Fig. 1 wird mittels des Differenzdrucksensors 56 eine direkte Differenzdruckmessung durchgeführt, und zwar auf Basis der von dem Drucksensor 52 in dem Zwischenraum 48 gemessenen Zwischenraum-Drucks und auf Basis des von dem Zusatzsensor 54 in dem Innenraum 20 gemessenen Innenraum-Drucks. Somit wird eine über das Material des Handschuh 32 hinweg tatsächlich anliegende Druckdifferenz direkt erfasst.

Bei den nachfolgend mit Bezugnahme auf die Fig. 2 und 3 beschriebenen Barrieresystemen 10 werden der von dem Drucksensor 52 in dem Zwischenraum 48 gemessene Zwischenraum-Druck und der von dem Zusatzsensor 54 in dem Innenraum 20 gemessene Innenraum-Drucks nicht unmittelbar durch einen Differenzdrucksensor 56 miteinander verknüpft; vielmehr werden weitere, nachfolgend beschriebene Differenzdrucksensoren verwendet, welche eine Ermittlung einer über das Material des Handschuhs 32 hinweg tatsächlich anliegenden Druckdifferenz im Wege einer rechnerischen Kompensation ermöglicht.

Abweichend von dem Barrieresystem 10 gemäß Fig. 1 ist der Drucksensor 52 der Barrieresysteme 10 gemäß Fig. 2 und Fig. 3 Teil eines Zwischenraum-Differenzdrucksensors 68, der eine Differenz zwischen dem Zwischenraum-Druck (also dem Druck in dem Zwischenraum 48) und einem Reinraum-Druck in dem Reinraum 12 erfasst. Der Reinraum-Druck wird mittels eines ersten Reinraum-Referenzsensors 69 erfasst.

Bei dem Barrieresystem gemäß Fig. 2 ist der Zusatzsensor 54 Teil eines Innenraum-Differenzdrucksensors 70, der eine Differenz zwischen dem Innenraum-Druck (also dem Druck in dem Innenraum 20) und dem Reinraum-Druck in dem Reinraum 12 erfasst. Der Reinraum-Druck wird mittels eines zweiten Reinraum-Referenzsensors 71 erfasst.

Beide Differenzdrucksensoren 68 und 70 des Barrieresystem 10 gemäß Fig. 2 sind mit der Auswerteeinrichtung 58 verbunden.

Abweichend von der unter Bezugnahme auf das Barrieresystem gemäß Fig. 1 beschriebenen direkten Erfassung eines Differenzdrucks über das Material des Handschuhs 32 hinweg ermöglicht das Barrieresystem gemäß Fig. 2 also eine Erfassung eines ersten Differenzdrucks zwischen dem Zwischenraum 48 und dem Reinraum 12 und eine Erfassung eines zweiten Differenzdrucks zwischen dem Innenraum 20 und dem Reinraum 12. Zur Ermittlung der über das Material des Handschuhs 32 hinweg tatsächlich anliegenden Druckdifferenz wird der zweite Differenzdruck mittels der Auswerteeinrichtung 58 von dem ersten Differenzdruck subtrahiert.

Abweichend von dem Barrieresystem 10 gemäß Fig. 2 ist der Zusatzsensor 54 des Barrieresystems gemäß Fig. 3 Teil eines Innenraum-Differenzdrucksensors 72, der eine Differenz zwischen dem Innenraum-Druck (also dem Druck in dem Innenraum 20) und einem Außenraum-Druck in einem außerhalb des Reinraums 12 (und auch außerhalb des Innenraum 20) angeordneten Außenraums 74 erfasst. Der Druck in dem Außenraum 74 wird mittels eines ersten Außenraum-Referenzsensors 76 erfasst.

Beide Differenzdrucksensoren 68 und 72 des Barrieresystem 10 gemäß Fig. 3 sind mit der Auswerteeinrichtung 58 verbunden.

Das Barrieresystem gemäß Fig. 3 umfasst außerdem einen Reinraumsensor 78 zur Erfassung eines Reinraum-Drucks in dem Reinraum 12. Der Reinraumsensor 78 und ein zweiter Außenraum-Referenzsensor 80 sind Bestandteile eines Reinraum-Differenzdrucksensors 82, mit welchem eine Druckdifferenz zwischen dem Reinraum 12 und dem Außenraum 74 erfasst wird. Für die Zwecke der nachfolgenden Beschreibung wird diese Druckdifferenz nachfolgend als "dritte Druckdifferenz" benannt.

Zusätzlich zu der unter Bezugnahme auf das Barrieresystem gemäß Fig. 2 beschriebenen Erfassung eines ersten Differenzdrucks zwischen dem Zwischenraum 48 und dem Reinraum 12 und eines zweiten Differenzdrucks zwischen dem Innenraum 20 und dem Reinraum 12 ermöglicht das Barrieresystem gemäß Fig. 3 also die Erfassung eines dritten Differenzdrucks. Zur Ermittlung der über das Material des Handschuhs 32 hinweg tatsächlich anliegenden Druckdifferenz wird eine Zwischendifferenz gebildet, bei welcher der dritte Differenzdruck mittels der Auswerteeinrichtung 58 von dem zweiten Differenzdruck subtrahiert wird. Diese Zwischendifferenz wird mittels der Auswerteeinrichtung 58 von dem ersten Differenzdruck subtrahiert. Mit anderen Worten: die tatsächlich über das Material des Handschuhs 32 hinweg anliegende Druckdifferenz wird ermittelt durch Summierung des ersten Differenzdrucks und des dritten Differenzdrucks und Subtraktion des zweiten Differenzdrucks.

Es ist möglich, dass der Zusatzsensor 54 Teil eines Druckregelungssystems ist, welches unter Verwendung des Reinraumsensors 78 den Druck in dem Innenraum 20 so regelt, dass dieser im Vergleich zu dem Reinraum 12 einen Überdruck aufweist, bspw. von ca. 25 Pascal.

## Patentansprüche

1. Barrieresystem (10), umfassend ein Gehäuse (16) mit einem aseptischen Innenraum (20), einen Handschuh (32) und eine Prüfeinrichtung (40) zur Prüfung einer Dichtigkeit des Handschuhs (32), wobei der Handschuh (32) an einem Handschuheingriff (30) des Gehäuses (16) angeordnet ist, wobei der Handschuh (32) in einem Gebrauchszustand mit nach außen weisender Außenfläche (34) und nach innen weisender Innenfläche (38) in dem Innenraum (20) des Gehäuses (16) angeordnet ist und wobei der Handschuh (32) in einem Prüfzustand mit nach innen weisender Außenfläche (34) und nach außen weisender Innenfläche (38) in einer Prüfkammer (44) der Prüfeinrichtung (40) angeordnet ist und einen Handschuhinnenraum (36) umgrenzt, der mit dem Innenraum (20) kommuniziert, wobei die Prüfkammer (44) auf der Außenseite (44) des Gehäuses (16) und den Handschuheingriff (30) mediendicht überfangend angeordnet ist, wobei in der Prüfkammer (44) ein Drucksensor (52) angeordnet ist zur Erfassung eines Zwischenraum-Drucks in einem Zwischenraum (48) zwischen der nach außen weisenden Innenfläche (38) des Handschuhs (32) und einer innenseitigen Begrenzung (46) der Prüfkammer (44), wobei die Prüfeinrichtung (40) mit einer Unterdruckeinrichtung (50) gekoppelt ist, mittels welcher der Zwischenraum (48) zur Prüfung der Dichtigkeit des Handschuhs (32) mit Unterdruck beaufschlagbar ist, wobei eine Umgebung des Gehäuses (16) und der Prüfeinrichtung (40) durch einen Reinraum (12) gebildet ist, **gekennzeichnet durch** einen in dem Innenraum (20) des Gehäuses (16) angeordneten Zusatzsensor (54) zur Erfassung eines Innenraum-Drucks in dem Innenraum (20) und durch eine Auswerteeinrichtung (58), welche zumindest mittelbar mit dem Drucksensor (52) und mit dem Zusatzsensor (54) gekoppelt ist.

2. Barrieresystem (10) nach Anspruch 1, **dadurch gekennzeichnet, dass** der Drucksensor (52) und der Zusatzsensor (54) durch einen Differenzdrucksensor (56) gebildet sind.

3. Barrieresystem (10) nach Anspruch 1, **dadurch gekennzeichnet, dass** der Drucksensor (52) Teil eines Zwischenraum-Differenzdrucksensors (68) ist, der eine Differenz zwischen dem Zwischenraum-Druck und einem Reinraum-Druck in dem Reinraum (12) erfasst.

4. Barrieresystem (10) nach Anspruch 3, **dadurch gekennzeichnet, dass** der Zusatzsensor (54) Teil eines Innenraum-Differenzdrucksensors (70, 72) ist, der eine Differenz zwischen dem Innenraum-Druck und einem Referenz-Druck an einem Referenzort erfasst.

5. Barrieresystem (10) nach Anspruch 4, **dadurch gekennzeichnet, dass** der Referenzort der Reinraum (12) ist oder dass der Referenzort ein außerhalb des Reinraums (12) angeordneter Außenraum (74) ist.

6. Barrieresystem (10) nach Anspruch 5, wobei der Referenzort der außerhalb des Reinraums (12) angeordnete Außenraum (74) ist, ferner umfassend einen mit der Auswerteeinrichtung (58) gekoppelter Reinraum-Differenzdrucksensor (82) zur Erfassung einer Druckdifferenz zwischen dem Reinraum-Druck in dem Reinraum (12) und einem Außenraum-Druck in dem Außenraum (74) .

7. Barrieresystem (10) nach einem der vorstehenden Ansprüche, **dadurch gekennzeichnet, dass** der Zusatzsensor (54) Bestandteil eines Druckregelungssystems zur Regelung des Innenraum-Drucks ist.

8. Verfahren zum Betrieb eines Barrieresystems (10) nach einem der vorstehenden Ansprüche, **dadurch gekennzeichnet, dass** die Prüfung der Dichtigkeit des Handschuhs (32) durchgeführt wird, während der Innenraum (20) des Gehäuses (16) zum Reinraum (12) hin mediendicht abgeschlossen ist.

9. Verfahren nach Anspruch 8, **dadurch gekennzeichnet, dass** die Prüfung auf Dichtigkeit des Handschuhs (32) durchgeführt wird, während in dem Innenraum (20) des Gehäuses (16) eine Produktion durchgeführt wird.

## Geänderte Patentansprüche

### Geänderte Patentansprüche gemäss Regel 137(2) EPÜ.

1. Barrieresystem (10), umfassend einen Reinraum (12) und ein in dem Reinraum (12) angeordnetes Gehäuse (16) mit einem aseptischen Innenraum (20), einen Handschuh (32) und eine Prüfeinrichtung (40) zur Prüfung einer Dichtigkeit des Handschuhs (32), wobei der Handschuh (32) an einem Handschuheingriff (30) des Gehäuses (16) angeordnet ist, wobei der Handschuh (32) in einem Gebrauchszustand mit nach außen weisender Außenfläche (34) und nach innen weisender Innenfläche (38) in dem Innenraum (20) des Gehäuses (16) angeordnet ist und wobei der Handschuh (32) in einem Prüfzustand mit nach innen weisender Außenfläche (34) und nach außen weisender Innenfläche (38) in einer Prüfkammer (44) der Prüfeinrichtung (40) angeordnet ist und einen Handschuhinnenraum (36) umgrenzt, der mit dem Innenraum (20) kommuniziert, wobei die Prüfkammer (44) auf der Außenseite (44) des Gehäuses (16) und den Handschuheingriff (30) mediendicht überfangend angeordnet ist, wobei in der Prüfkammer (44) ein Drucksensor (52) angeordnet ist zur Erfassung eines Zwischenraum-Drucks in einem Zwischenraum (48) zwischen der nach außen weisenden Innenfläche (38) des Handschuhs (32) und einer innenseitigen Begrenzung (46) der Prüfkammer (44), wobei die Prüfeinrichtung (40) mit einer Unterdruckeinrichtung (50) gekoppelt ist, mittels welcher der Zwischenraum (48) zur Prüfung der Dichtigkeit des Handschuhs (32) mit Unterdruck beaufschlagbar ist, wobei eine Umgebung des Gehäuses (16) und der Prüfeinrichtung (40) durch den Reinraum (12) gebildet ist, **gekennzeichnet durch** einen in dem Innenraum (20) des Gehäuses (16) angeordneten Zusatzsensor (54) zur Erfassung eines Innenraum-Drucks in dem Innenraum (20) und durch eine Auswerteeinrichtung (58), welche zumindest mittelbar mit dem Drucksensor (52) und mit dem Zusatzsensor (54) gekoppelt ist.

2. Barrieresystem (10) nach Anspruch 1, **dadurch gekennzeichnet, dass** der Drucksensor (52) und der Zusatzsensor (54) durch einen Differenzdrucksensor (56) gebildet sind.

3. Barrieresystem (10) nach Anspruch 1, **dadurch gekennzeichnet, dass** der Drucksensor (52) Teil eines Zwischenraum-Differenzdrucksensors (68) ist, der eine Differenz zwischen dem Zwischenraum-Druck und einem Reinraum-Druck in dem Reinraum (12) erfasst.

4. Barrieresystem (10) nach Anspruch 3, **dadurch gekennzeichnet, dass** der Zusatzsensor (54) Teil eines Innenraum-Differenzdrucksensors (70, 72) ist, der eine Differenz zwischen dem Innenraum-Druck und einem Referenz-Druck an einem Referenzort erfasst.

5. Barrieresystem (10) nach Anspruch 4, **dadurch gekennzeichnet, dass** der Referenzort der Reinraum (12) ist oder dass der Referenzort ein außerhalb des Reinraums (12) angeordneter Außenraum (74) ist.

6. Barrieresystem (10) nach Anspruch 5, wobei der Referenzort der außerhalb des Reinraums (12) angeordnete Außenraum (74) ist, ferner umfassend einen mit der Auswerteeinrichtung (58) gekoppelter Reinraum-Differenzdrucksensor (82) zur Erfassung einer Druckdifferenz zwischen dem Reinraum-Druck in dem Reinraum (12) und einem Außenraum-Druck in dem Außenraum (74).

7. Barrieresystem (10) nach einem der vorstehenden Ansprüche, **dadurch gekennzeichnet, dass** der Zusatzsensor (54) Bestandteil eines Druckregelungssystems zur Regelung des Innenraum-Drucks ist.

8. Verfahren zum Betrieb eines Barrieresystems (10) nach einem der vorstehenden Ansprüche, **dadurch gekennzeichnet, dass** die Prüfung der Dichtigkeit des Handschuhs (32) durchgeführt wird, während der Innenraum (20) des Gehäuses (16) zum Reinraum (12) hin mediendicht abgeschlossen ist.

9. Verfahren nach Anspruch 8, **dadurch gekennzeichnet, dass** die Prüfung auf Dichtigkeit des Handschuhs (32) durchgeführt wird, während in dem Innenraum (20) des Gehäuses (16) eine Produktion durchgeführt wird.
